# FASCICULE DE BREVET EUROPEEN

(11) **EP 2 917 659 B1**
(45) Date de publication et mention de la délivrance du brevet: **30.05.2018**
(21) Numéro de dépôt: 13803101.8
(22) Date de dépôt: 04.11.2013
(51) Int. Cl.: F24S 25/00, F16B 7/18

(54) **DISPOSITIF POUR FIXER UN ACCESSOIRE SUR UNE TOITURE ONDULÉE**
VORRICHTUNG ZUR BEFESTIGUNG EINES ZUBEHÖRTEILS AN EINEM WELLBLECHDACH
DEVICE FOR SECURING AN ACCESSORY TO A CORRUGATED ROOF

(30) Priorité: 06.11.2012 FR 1260526
(43) Date de publication de la demande: 16.09.2015
(73) Titulaire: Ateliers LR Etanco, 78230 Le Pecq (FR)
(72) Inventeur: BLAINVILLE, Mathieu, F-28260 Le Mesnil-simon (FR); LEROY, Alain, F-78820 Juziers (FR)
(74) Mandataire: Mazabraud, Xavier
(86) Numéro de dépôt international: PCT/FR2013/052622
(87) Numéro de publication internationale: WO 2014/072625

(56) Documents cités:
- EP-A2- 2 479 514
- WO-A1-2012/104559
- US-A1- 2011 271 611
- US-A1- 2011 272 545

## Description

La présente invention se rapporte au domaine des toitures, plus particulièrement aux dispositifs pour fixer un accessoire, par exemple un panneau solaire, sur une toiture en forme d'onde. Une toiture en forme d'onde peut être, par exemple, un bac-acier ou du type ondulé en fibrociment ou en tôle ondulée.

Les plaques de toitures, notamment ondulées, sont généralement faites pour reprendre les charges d'eau, de neige et de vent. Lorsqu'il est prévu d'y ajouter un accessoire, ces plaques de toitures ne sont donc pas prévues pour le supporter et le poids de l'accessoire peut rapidement dépasser les capacités de ces plaques de la toiture.

L'invention a pour but de proposer un système qui permette de résoudre les inconvénients précédemment exposés, et notamment d'assurer un support pour accessoire qui évite une surcharge sur les plaques de toiture. EP 2 479 514 décrit un système pour la fixation d'un accessoire sur un sommet d'onde d'une plaque ondulée d'une toiture selon le préambule de la revendication 1. Selon l'invention, un tel système pour fixer un accessoire sur un sommet d'onde d'une plaque ondulée d'une toiture est définit par la revendication 1. Avantageusement, le cavalier a un profil longitudinal sensiblement constant et sensiblement symétrique relativement à un plan longitudinal et vertical.

Le cavalier peut comprendre deux ailes, chacune d'un côté du cavalier, chaque aile s'étendant vers le haut depuis l'assise, les ailes formant entre elles une gorge pour y loger la tête de la vis d'ancrage.

Le système peut en outre comprendre des moyens de prise réciproque entre le lardon et le cavalier, les moyens de prise étant prévus pour empêcher le lardon de se déplacer vers le haut et, de préférence, latéralement. L'écrou est avantageusement vissé sur la tige de la vis de fixation, le lardon étant disposé entre la tête de la vis de fixation et l'écrou, cet écrou étant de préférence un écrou freiné.

De préférence, le système comprend des moyens de butée longitudinale, de préférence amovible, pour le lardon. Ces moyens de butée longitudinale peuvent comprendre un cylindre longitudinal, de préférence fendu, formé dans le cavalier pour y recevoir une vis de butée, la tête de ladite vis formant une butée pour le lardon.

En outre, le système peut comprendre une cale prévue pour être disposée entre le cavalier et la plaque pour adapter ledit cavalier à la forme d'onde de la plaque. Cette cale peut comprendre deux bordures latérales, s'étendant longitudinalement et prévues pour le positionnement latéral du cavalier sur la cale. La cale peut encore comprendre un passage pour le passage libre de la vis d'ancrage. La cale comprend avantageusement des moyens d'étanchéité pour faire étanchéité entre la cale et le cavalier, et, entre la cale et la plaque, autour du passage de vis.

L'invention porte aussi sur un système pour la fixation d'un panneau solaire, caractérisé en ce qu'il comprend un système de fixation selon l'invention.

Plusieurs modes d'exécution de l'invention seront décrits ci-après, à titre d'exemples non limitatifs, en référence aux dessins annexés dans lesquels :
- la figure 1 est une vue en élévation d'un premier mode de réalisation d'un système de fixation selon l'invention ;
- la figure 2 est une vue en perspective d'un cavalier du système de la figure 1, équipé d'une butée ;
- la figure 3 est une vue en perspective d'une cale pour le cavalier des figures 1 et 2, utilisable dans un deuxième mode de réalisation d'un système selon l'invention ;
- la figure 4 est une vue en élévation du profil de la cale de la figure 3 ;
- la figure 5 est une vue en élévation du profil d'une autre cale adaptable au cavalier des figures 1 et 2 ; et,
- les figures 6 et 7 sont, respectivement, une vue en élévation et une vue en perspective du cavalier des figures 1 et 2 en position sur la cale des figures 3 et 4.

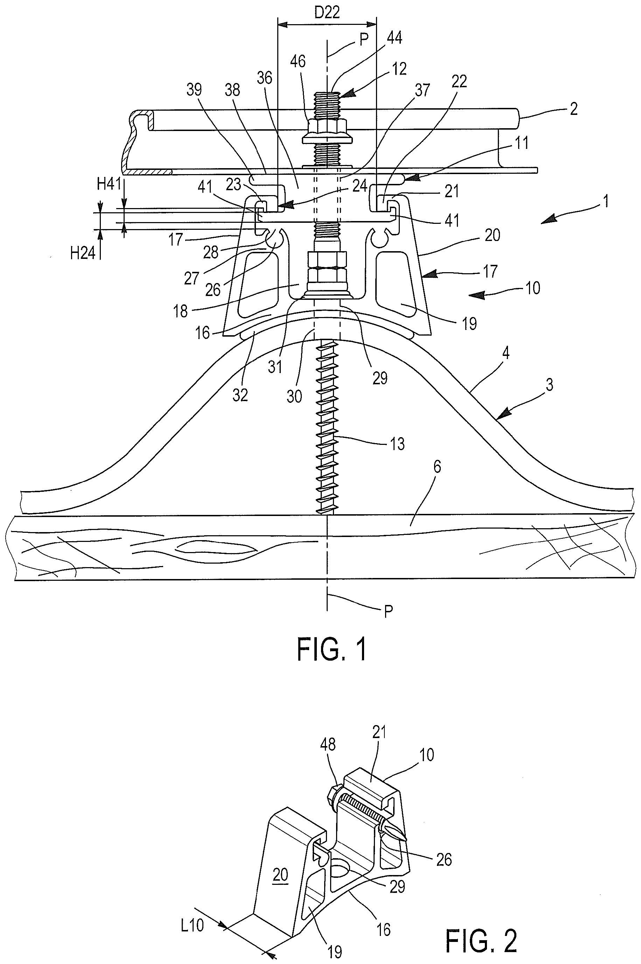

La figure 1 illustre un premier mode de réalisation d'un système de fixation 1 selon l'invention. Dans l'exemple illustré, le système 1 est utilisé pour fixer un accessoire 2 sur une toiture 3 ; la toiture est constituée de plaques 4 en fibrociment ondulée, fixées sur le support de la toiture qui, dans l'exemple illustré, est constitué de poutres 6 en bois. L'accessoire 2 est ici illustré par un rail de fixation 2, prévu, par exemple, pour recevoir un panneau solaire. A la figure 1, seule une onde, sensiblement sinusoïdale, d'une plaque 4 est représentée, et, partiellement, une portion de poutre 6 correspondante. La direction d'extension de la plaque 4 est perpendiculaire au plan de la figure 1. Pour la description de cette figure, on considère comme vertical ce qui s'étend de haut en bas de la figure. Le dispositif 1 est sensiblement symétrique, de part et d'autre d'un plan P vertical et perpendiculaire au plan de la figure 1.

Le système 1 selon l'invention comprend notamment un cavalier 10, un lardon de reprise 11 faisant partie d'une fixation 12 pour l'accessoire 2 et un ancrage 13 pour le système sur la toiture 3. Les sections du cavalier 10 et du lardon 11 sont sensiblement constantes sur toute leur longueur, les longueurs étant mesurées perpendiculairement au plan de la figure 1.

Le cavalier 10 a une section, dans le plan de la figure 1, sensiblement trapézoïdale, plus large en bas qu'en haut ; il comprend une assise 16, reliant deux ailes 17, s'étendant vers le haut depuis l'assise 16 et formant, entre elles et au-dessus de l'assise 16, une gorge centrale 18. L'assise 16 forme une voute convexe vers le haut, adaptée pour épouser sensiblement la forme d'un sommet de la plaque 4.

Chaque aile 17 comprend un corps creux 19 dont une paroi extérieure 20 se prolonge vers le haut puis se replie, d'abord horizontalement vers le plan P en formant une paroi intermédiaire 21, puis, vers le bas par une paroi terminale 22. Le prolongement de la paroi extérieure 20, la paroi intermédiaire 21 et la paroi terminale 22 forment ensemble une griffe 24 s'étendant longitudinalement autour d'une gorge 23, orientée vers le bas.

Un cylindre fendu 26 est formé dans une paroi supérieure 27 du corps creux 19. Le cylindre fendu 26 comprend une fente 28 s'étendant longitudinalement, sur toute la longueur du cylindre et dans sa partie supérieure, en vis-à-vis de la paroi terminale 22.

Un passage 29, cylindrique et traversant, est formé verticalement dans l'assise 16 au fond de la gorge centrale 18.

Comme illustré à la figure 1, le cavalier 10 est disposé au sommet de l'onde de la plaque 4. Il y est maintenu par l'ancrage 13. Dans l'exemple illustré, l'ancrage est une vis bois 13 auto perceuse à ailettes. La vis d'ancrage 13 emprunte le passage 29 de diamètre supérieur aux ailettes de la vis, lequel est disposé en vis-à-vis d'un passage similaire 30 formé par les ailettes de la vis lors de son passage au sommet de l'onde. Le passage de vis 29 est plus large pour que le filetage de la vis d'ancrage 13 l'emprunte librement. La gorge centrale 18 forme un logement pour la tête de la vis d'ancrage 13 qui repose sur le fond de la gorge centrale 18.

Un premier joint d'étanchéité 31 est disposé entre la tête de la vis d'ancrage 13 et le fond de la gorge centrale 18. Un deuxième joint d'étanchéité 32, de préférence un joint élastomère, est disposé sous l'assise 16 entre le cavalier 10 et la plaque 4 ; Ces joints 31,32 assurent une étanchéité autour de la vis d'ancrage 13, pour éviter des infiltrations d'eau au travers des passages de vis 29,30. En outre, le deuxième joint 32 permet d'absorber une éventuelle différence de courbure entre le sommet de l'onde et l'assise 16.

Le lardon de reprise 11 a une forme de « I » majuscule, comprenant un corps central 36 massif, axialement et verticalement percé d'un trou taraudé 35. Il a une face supérieure 38, sensiblement plane et horizontale, portée à la fois par le corps central 36 et par deux ailettes 39 prolongeant latéralement le corps central 36 dans sa partie supérieure. Il comprend, de chaque côté de la base du corps central 36 une forme de griffe 41, orientée vers le haut, prévue pour venir en prise réciproque avec la griffe 24 correspondante du cavalier 10. Dans la position de montage, illustrée à la figure 1, les ailettes s'étendent chacune au-dessus d'une paroi intermédiaire 21 respective du cavalier 10.

La hauteur H41 d'une griffe 41 du lardon 11 est inférieure à la hauteur H24 de l'espace libre entre la paroi supérieure 27 et la paroi terminale 22 du cavalier 10. Ainsi, le lardon peut être mis en place par rotation dans le cavalier, au lieu d'être introduit par coulissement depuis une extrémité du cavalier. Ceci est particulièrement avantageux lorsque le cavalier à une grande longueur L10 ; ceci est encore plus avantageux lorsque le lardon doit être mis en place entre deux autres, déjà en place.

Dans l'exemple illustré, les moyens de fixation pour l'accessoire 2 comprennent en outre un boulon 12 formé d'une vis 44 et d'un écrou freiné 46. La vis de fixation 44 est vissée dans le taraudage 37 du lardon 11, tête en bas, sa tige s'étendant au-dessus de la surface supérieure 38 ; ainsi, l'accessoire est fixé sur la tige de la vis de fixation 44, pincé entre la surface supérieure 38 du lardon et l'écrou 46.

Dans le cas illustré, la vis de fixation 44 est montée tête bêche avec la vis d'ancrage 13 ; lors du montage du lardon 11 et de la fixation de l'accessoire 2, tant que les deux têtes ne sont pas en contact, un couple de vissage de l'écrou freiné 46 est transmis à la vis de fixation qui se dévisse jusqu'à ce que la tête de la vis de fixation 44 soit en butée contre celle de la vis d'ancrage ; l'écrou 46 étant du type freiné, assure que les deux têtes soient en contacte avant que l'accessoire 2 y soit fixé. En même temps cela assure la prise du lardon 11 sur le cavalier 10, chaque griffe 41 de l'un étant en butée contre une griffe 24 correspondante de l'autre.

Une telle disposition est particulièrement avantageuse puisque les efforts tendant à plaquer l'accessoire sur la toiture 3 sont transmis par les vis 44, 13 à la poutre 6, sans s'exercer sur la plaque 4. Ainsi, il n'est pas nécessaire de dimensionner la plaque 4 en fonction de l'accessoire 2 ; pour la même raison, l'accessoire 2 peut être installé sur une toiture existante, sur laquelle il n'était pas prévu initialement.

A la figure 2, une vis de butée 48 est représentée vissée dans le cylindre fendu 26. Le cylindre 26 et la vis 48 forment ensemble des moyens de butée 26,48 pour le lardon, qui évitent le glissement du lardon relativement au cavalier, particulièrement lorsque la toiture est en pente.

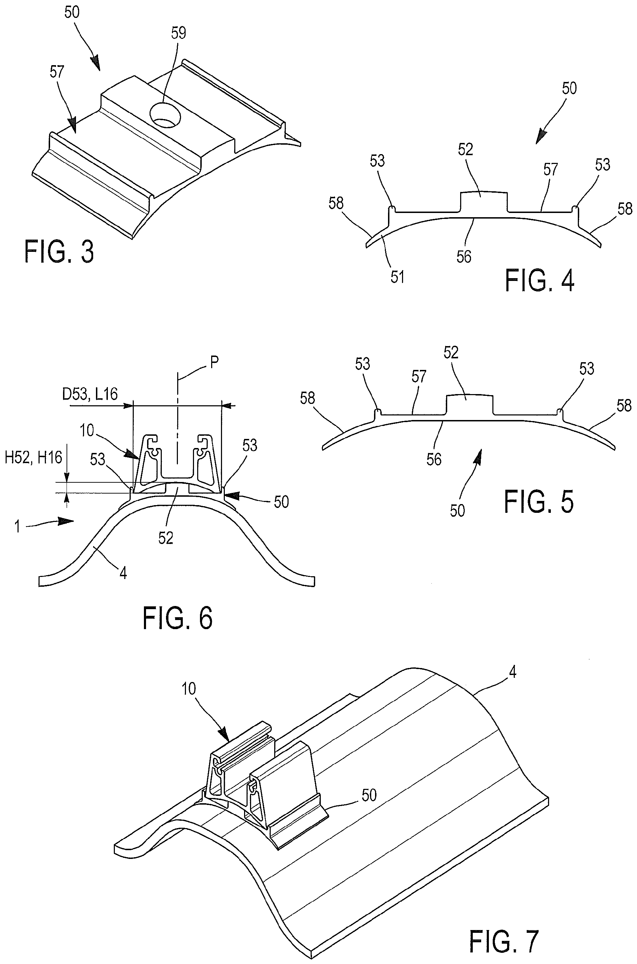

On va maintenant décrire, en référence aux figures 3 à 7, un deuxième mode de réalisation pour un système 1 selon l'invention, en ce qu'il diffère du mode de réalisation précédemment décrit. Comme particulièrement illustré à la figure 6, dans ce deuxième mode de réalisation, le système 1 comprend une cale 50 disposée entre le cavalier 10 et la plaque 4.

La cale 50 a un profil transversal constant, dont deux exemples sont illustrés aux figures 4 et 5. Elle comprend une semelle 51, un talon 52 et deux bordures 53. La semelle a une face inférieure en forme de voute 56 adaptée à la forme d'un sommet d'onde de la plaque 4 ; elle a une face supérieure en forme de plateforme 57. Le talon 52 s'étend longitudinalement au centre de la plateforme 57 ; chacune des bordures 53 s'étend longitudinalement à une extrémité latérale respective de la plateforme. De chaque côté de la plateforme 57, la semelle 51 se prolonge par deux lèvres 58.

Comme illustré à la figure 3, un passage de vis 59 est formé verticalement dans l'axe du talon, de sorte qu'il puisse être disposé dans le prolongement du passage de vis 29 du cavalier et du passage de vis 30 de la plaque 4.

La distance D53 entre les bordures 53 est sensiblement égale à la largeur L16 de la base du cavalier 10. Les bordures servent ainsi au positionnement latéral du cavalier sur la cale 50. La face supérieure du talon est bombée et la hauteur H52 du talon au-dessus de la plateforme est sensiblement égale à la hauteur H16 de la voute de l'assise 16 de sorte que le talon assure une étantchéité entre la cale et le cavalier, autour du passage de vis 59.

L'usage d'un jeu de cales permet d'adapter un unique type de profil de cavalier à des profils d'onde variés ; pour toutes les cales d'un même jeu, les dimensions de la plateforme 57, du talon 52 et des bordures 53 sont avantageusement identiques, seule variant la forme et les dimensions de la semelle 51, adaptée à un profil d'onde donné. Ainsi, la cale de la figure 4 est prévue pour s'adapter à une onde plus étroite que celle de la figure 5.

Bien sûr, l'invention n'est pas limitée aux exemples qui viennent d'être décrits.

Notamment, dans le cas d'un cavalier de grande longueur, il est avantageusement prévu que deux lardons soient montés à la façon illustrée à la figure 1, le cavalier fonctionnant comme une poutre reposant sur deux vis d'ancrage ; un autre lardon (ou plusieurs autres) peut alors être mis en place sur le même cavalier, la tête de la vis de fixation respective venant en appui au fond de la gorge centrale, les efforts étant transmis aux vis d'ancrage par la poutre formée par le cavalier, sans affecter la plaque.

Une telle invention est particulièrement avantageuse lorsqu'on doit fixer une charge lourde sur une toiture ondulée, charge pour laquelle cette toiture n'est pas prévue à l'origine. C'est particulièrement le cas lorsque l'on veut poser des panneaux solaires sur une habitation existante.

## Revendications

1. Système (1) pour la fixation d'un accessoire (2) sur un sommet d'onde d'une plaque ondulée (4) d'une toiture (3), **caractérisé en ce qu'**il comprend :
- un cavalier comprenant une assise (16) en forme de voute convexe vers le haut, ledit cavalier étant prévu pour reposer, au moins indirectement, sur ledit sommet ;
- des moyens d'ancrage du cavalier prévus pour coulisser librement au travers de ladite plaque (4) ;
- des moyens de fixation pour ledit accessoire (2) sur ledit cavalier, adaptés pour transmettre aux moyens d'ancrage des efforts exercés par ledit accessoire (2),
**caractérisé en ce que** lesdits moyens d'ancrage comprennent une vis (13) et un passage libre (29) pour la vis au travers de l'assise (16), la tête de la vis reposant au-dessus de l'assise (16), et **en ce que** les moyens de fixation comprennent un lardon (11), une vis de fixation (44) et un écrou (46), ladite vis (44) étant montée vissée tête en bas dans ledit lardon, de sorte que ladite tête de ladite vis de fixation repose contre la tête de la vis d'ancrage (13).

2. Système selon la revendication 1, **caractérisé en ce que** le cavalier (10) a un profil longitudinal sensiblement constant et sensiblement symétrique relativement à un plan longitudinal et vertical (P).

3. Système selon l'une des revendications 1 ou 2, **caractérisé en ce que** le cavalier (10) comprend deux ailes (17), chacune d'un côté du cavalier, chaque aile (17) s'étendant vers le haut depuis l'assise (16), lesdites ailes (17) formant entre elles une gorge (18) pour y loger la tête de la vis d'ancrage (13).

4. Système selon l'une des revendications 1 à 3, **caractérisé en ce qu'**il comprend des moyens (24, 41) de prise réciproque entre ledit lardon (11) et le cavalier (10), lesdits moyens de prise étant prévus pour empêcher le lardon de se déplacer vers le haut et, de préférence, latéralement.

5. Système selon l'une des revendications précédentes, **caractérisé en ce que** l'écrou (46) est vissé sur la tige de la vis (44) de fixation, le lardon (11) étant disposé entre la tête de ladite vis (44) et ledit écrou (11), ledit écrou étant de préférence un écrou freiné.

6. Système selon l'une des revendications précédentes, **caractérisé en ce qu'**il comprend des moyens (26, 48) de butée longitudinale, de préférence amovible, pour le lardon (11).

7. Système selon la revendication 6, **caractérisé en ce que** les moyens de butée longitudinale comprennent un cylindre (26) longitudinal, de préférence fendu, formé dans le cavalier (10) pour y recevoir une vis de butée (48), la tête de ladite vis formant une butée pour le lardon (11).

8. Système selon l'une des revendications précédentes, **caractérisé en ce qu'**il comprend une cale (50) prévue pour être disposée entre le cavalier (10) et la plaque pour adapter ledit cavalier à une forme d'onde.

9. Système selon la revendication 8, **caractérisé en ce que** la cale comprend deux bordures latérales (53), s'étendant longitudinalement et prévues pour le positionnement latéral du cavalier sur la cale.

10. Système selon l'une des revendications 8 ou 9, **caractérisé en ce que** la cale comprend un passage de vis (59) pour le passage libre de la vis d'ancrage (13).

11. Système selon la revendication 10, **caractérisé en ce que** la cale comprend des moyens d'étanchéité (52, 56) pour faire étanchéité entre la cale et le cavalier, et, entre la cale et la plaque (4), autour du passage de vis (59).

12. Système pour la fixation d'un panneau solaire, **caractérisé en ce qu'**il comprend un système de fixation (1) selon l'une des revendications précédentes.

## Patentansprüche

1. System (1) zur Befestigung eines Zubehörteils (2) am Scheitel eines Wellblechs (4) eines Daches (3), **dadurch gekennzeichnet, dass** das System umfasst:
- einen Reiter mit einem Sitz (16) in Form einer konvexen Wölbung nach oben, wobei der Reiter zumindest für eine indirekte Abstützung auf dem Scheitel vorgesehen ist;
- Verankerungsmittel für den Reiter, die derart vorgesehen sind, dass sie frei durch das Blech (4) hindurch gleiten können;
- Befestigungsmittel für das Zubehörteil (2) an dem Reiter, die ausgebildet sind für die Übertragung von Kräften, die von dem Zubehörteil (2) ausgeübt werden, auf die Verankerungsmittel,
**dadurch gekennzeichnet, dass** die Verankerungsmittel eine Schraube (13) und einen freien Durchgang (29) für die Schraube durch den Sitz (16) umfassen, wobei sich der Kopf der Schraube auf dem Sitz (16) abstützt, und dass die Befestigungsmittel eine Leiste (11), eine Befestigungsschraube (44) und eine Mutter (46) umfassen, wobei die Schraube (44) mit dem Kopf nach unten in der Leiste derart verschraubt ist, dass der Kopf der Befestigungsschraube an dem Kopf der Verankerungsschraube (13) anliegt.

2. System nach Anspruch 1, **dadurch gekennzeichnet, dass** der Reiter (10) ein Längsprofil aufweist, das im Wesentlichen konstant und relativ zu einer vertikalen Längsebene (P) im Wesentlichen symmetrisch ist.

3. System nach einem der Ansprüche 1 oder 2, **dadurch gekennzeichnet, dass** der Reiter (10) zwei Schenkel (17) aufweist, jeweils auf einer Seite des Reiters, wobei sich jeder Schenkel (17) von dem Sitz (16) nach oben erstreckt und wobei die Schenkel (17) zwischen sich eine Nut (18) für die dortige Aufnahme des Kopfes der Verankerungsschraube (13) bilden.

4. System nach einem der Ansprüche 1 bis 3, **dadurch gekennzeichnet, dass** dieses wechselseitige Eingriffsmittel (24, 41) zwischen der Leiste (11) und dem Reiter (10) umfasst, wobei die Eingriffsmittel vorgesehen sind, um die Leiste an Bewegung nach oben und vorzugsweise seitlich zu hindern.

5. System nach einem der vorhergehenden Ansprüche, **dadurch gekennzeichnet, dass** die Mutter (46) auf den Schaft der Befestigungsschraube (44) geschraubt ist, wobei die Leiste (11) zwischen dem Kopf der Schraube (44) und der Mutter (11) liegt und wobei die Mutter bevorzugt eine selbsthemmende Mutter ist.

6. System nach einem der vorhergehenden Ansprüche, **dadurch gekennzeichnet, dass** dieses vorzugsweise lösbare Längsanschlagmittel (26, 48) für die Leiste (11) umfasst.

7. System nach Anspruch 6, **dadurch gekennzeichnet, dass** die Längsanschlagmittel einen vorzugsweise geschlitzten Längszylinder (26) umfassen, der in dem Reiter (10) gebildet ist, um darin eine Anschlagschraube (48) aufzunehmen, wobei der Schraubenkopf einen Anschlag für die Leiste (11) bildet.

8. System nach einem der vorhergehenden Ansprüche, **dadurch gekennzeichnet, dass** dieses einen Keil (50) umfasst, der für die Anordnung zwischen dem Reiter (10) und dem Blech vorgesehen ist, um den Reiter an eine Wellenform anzupassen.

9. System nach Anspruch 8, **dadurch gekennzeichnet, dass** der Keil zwei Seitenränder (53) aufweist, die sich längs erstrecken und für die seitliche Positionierung des Reiters an dem Keil vorgesehen sind.

10. System nach einem der Ansprüche 8 oder 9, **dadurch gekennzeichnet, dass** der Keil einen Schraubendurchgang (59) für den freien Durchtritt der Verankerungsschraube (13) aufweist.

11. System nach Anspruch 10, **dadurch gekennzeichnet, dass** der Keil Dichtungsmittel (52, 56) zur Abdichtung zwischen dem Keil und dem Reiter und rund um den Schraubendurchgang (59) zwischen dem Keil und dem Blech (4) aufweist.

12. System zum Befestigung eines Sonnenkollektors, **dadurch gekennzeichnet, dass** dieses ein Befestigungssystem (1) gemäß einem der vorhergehenden Ansprüche umfasst.

## Claims

1. A system (1) for fastening an accessory (2) on a wave crest of a corrugated plate (4) of a roof assembly (3), **characterized in that** it comprises:
- a rider comprising a seat (16) shaped convex arch upwardly, said rider intended to rest, at least indirectly, on said crest;
- an anchoring means provided for the rider to slide freely through the plate (4);
- fastening means for said accessory (2) on said rider, adapted to transmit forces exerted by said accessory (2) to the anchoring means,
**characterized in that** said anchoring means comprise a screw (13) and a free passage (29) for the screw through the seat (16), the head of the screw resting above the seat (16), and **in that** the fastening means comprises a gib (11), a fastening screw (44) and a nut (46), said screw (44) being mounted screwed upside down in said gib, so that said head of said fastening screw rests against the head of the anchoring screw (13).

2. A system according to claim 1, **characterized in that** the rider (10) has a substantially constant longitudinal profile that is substantially symmetrical relative to a longitudinal and vertical plane (P).

3. A system according to one of claims 1 or 2, **characterized in that** the rider (10) comprises two wings (17), one on each side of the rider, each wing (17) extending upwardly from the seat (16), said wings (17) forming therebetween a groove (18) to house the head of the anchoring screw (13).

4. A system according to one of claims 1 to 3, **characterized in that** it comprises means (24, 41) for mutual engagement between said gib (11) and rider (10), said engaging means being provided to prevent the gib from moving upwardly and, preferably laterally.

5. A system according to one of the preceding claims, **characterized in that** the nut (46) is screwed onto the shank of the screw (44) fixing the gib (11) being arranged between the head of said screw (44) and said nut (11), said nut preferably being a locknut.

6. A system according to one of the preceding claims, **characterized in that** it comprises means (26, 48) for longitudinal abutment, preferably removable, for the gib (11).

7. A system according to claim 6, **characterized in that** the longitudinal abutment means comprise a longitudinal cylinder (26), preferably slotted, formed in the rider (10) to receive a stop screw (48), the head of said screw forming a stop for the gib (11).

8. A system according to one of the preceding claims, **characterized in that** it comprises a shim (50) intended to be arranged between the rider (10) and the plate to adapt said rider to a waveform.

9. A system of claim 8, **characterized in that** the shim comprises two lateral edges (53) extending longitudinally and intended for the lateral positioning of the rider on the shim.

10. A system according to one of claims 8 or 9, **characterized in that** the shim comprises a screw passage (59) for the free passage of the anchoring screw (13).

11. A system according to claim 10, **characterized in that** the shim comprises sealing means (52, 56) for sealing between the shim and the rider, and between the spacer and the plate (4) around the screw passage (59).

12. A system for fastening a solar panel, **characterized in that** it comprises a fastening system (1) according to one of the preceding claims.
